Europäisches Patentamt

European Patent Office

Office européen des brevets

(19)

(11) Publication number: **0 239 198 B1**

(12) **EUROPEAN PATENT SPECIFICATION**

(45) Date of publication of patent specification: **18.09.91** (51) Int. Cl.⁵: **F16H 1/28**, F16H 57/08

(21) Application number: **87300793.4**

(22) Date of filing: **29.01.87**

(54) Planetary gear set and assembly method.

(30) Priority: **24.02.86 US 831869**

(43) Date of publication of application:
**30.09.87 Bulletin 87/40**

(45) Publication of the grant of the patent:
**18.09.91 Bulletin 91/38**

(84) Designated Contracting States:
**DE FR GB IT**

(56) References cited:
**FR-A- 1 576 130
US-A- 3 396 610
US-A- 3 504 564
US-A- 3 983 764**

(73) Proprietor: **GENERAL MOTORS CORPORA-
TION
General Motors Building 3044 West Grand
Boulevard
Detroit Michigan 48202(US)**

(72) Inventor: **Ordo, Richard Alan
1575 Fry Road
Greenwood Indiana 46412(US)**

(74) Representative: **Denton, Michael John et al
Patent Section Vauxhall Motors Limited 1st
Floor Gideon House 26 Chapel Street
Luton Bedfordshire LU1 2SE(GB)**

Rank Xerox (UK) Business Services

## Description

This invention relates to a method of assembling a planetary gear set as specified in the preamble of claim 1, for example as specified in FR-A-1 576 130, and also to a planetary gear set adapted for such an assembly method.

More particularly, the invention relates to an assembly method as aforesaid, and a planetary gear set for assembly thereby, permitting assembly in an automotive transmission in an automated operation.

In the assembly of planetary gear-type automotive transmissions, it is common practice to mount the transmission case on a fixture which permits end-for-end inversion of the case so that internal components can be installed from opposite ends of the case.

It is also common to install a planetary gear set in a sequence which includes installation of the sun gear and ring gear of the planetary gear set on the case before installation of the planet gears and planet carrier of the planetary gear set. As an element of this last-mentioned step, the planet gears, which are already mounted on the carrier and are independently rotatable relative to each other, are usually "timed" on either the sun gear or the ring gear. The term "timed" is used herein to signify meshing engagement of all the planet gears with either the sun gear or the ring gear (hereinafter referred to as the "timing gear") before engagement of any of the planet gears with, respectively, the ring gear or the sun gear.

After the planet gears have been timed on the timing gear (sun gear or ring gear), they easily mesh with the other gear (ring gear or sun gear respectively), because the timed planet gears will rotate in unison.

A robot for automatically performing this assembly step can be programmed to advance the carrier along a fixed axis and to rotate it about that axis. However, for successful performance of this step the robot may require expensive machine vision technology, because the necessary precise alignment of the planet carrier on the axis of rotation of the timing gear may not be easily achieved due to manufacturing tolerances in the components of the transmission and the end-for-end inversions of the case. Further, if the ring gear is part of a disc clutch assembly, as is common, the assembly procedure is even more difficult, because the ring gear may bear a markedly eccentric relationship to the sun gear.

The present invention is concerned with the assembly of a planet carrier of a planetary gear set with its planet gears between a sun gear and a ring gear of the gear set, the sun gear and ring gear having been installed on a support structure prior to installation of the planet carrier.

The invention is also concerned with a new and improved planetary gear set suitable for assembly by this method.

To this end an assembly method for a planetary gear set in accordance with the present invention is characterised over FR-A-1 576 130 by the features specified in the characterising portion of claim 1.

A new and improved planetary gear set in accordance with the present invention, suitable for assembly by the method of the invention, forms the subject of claim 2.

The assembly method and planetary gear set in accordance with the present invention thereby allow the planet carrier assembly operation to be performed by a robot without machine vision technology, programmed only to advance the planet carrier along an axis and to rotate the carrier about that axis.

A preferred embodiment of the new and improved planetary gear set in accordance with the present invention includes locating means on the timing gear which positions the planet carrier in a staged position relative to the timing gear wherein the axes of rotation of the carrier and the timing gear are co-linearly aligned, with each of the planet gears disposed in a plane perpendicular to the axis of rotation of the carrier, so that when the carrier is rotated and mildly biased towards the timing gear, the planet gears quickly and easily achieve meshing engagement with the timing gear.

Specifically, the means whereby the planet carrier is staged relative to the timing gear includes a staging annulus on an end of the timing gear in a plane perpendicular to the axis of rotation of the timing gear, and a centring shoulder (concentricity chamfer) on the timing gear having one edge contiguous with the staging annulus, the staging annulus being defined by and disposed between the addendum and dedendum circles of the timing gear and being interrupted by the tooth spaces between the timing gear teeth.

In a preferred embodiment of the assembly method (and correspondingly of the planetary gear set) in accordance with the present invention, the timing gear is the sun gear, so that during advancement of the carrier the planet gears contact the concentricity chamfer and cam the sun gear into alignment on the axis of rotation of the planet carrier, which alignment is achieved in the staged position of the carrier relative to the sun gear, the staged position being characterised by engagement of an end of each of the planet gears with the sun gear in the staging annulus.

In this preferred embodiment, also, a disc clutch is disposed between the ring gear and the support structure, and a frustoconical bevel surface is formed on an end of the ring gear overlapping the ends of the ring gear teeth so that, after the planet gears have been timed on the sun gear and further advanced towards the ring gear while the carrier rotates, the teeth on the planet gears engage the bevel surface and cam the ring gear into alignment on the axis of rotation of the carrier and then achieve substantially simultaneous meshing engagement with the ring gear teeth.

In the drawings:

Figure I is a fragmentary elevational view, with parts shown in section, of a preferred embodiment of a planetary gear set in accordance with the present invention undergoing assembly by the assembly method in accordance with the invention; and

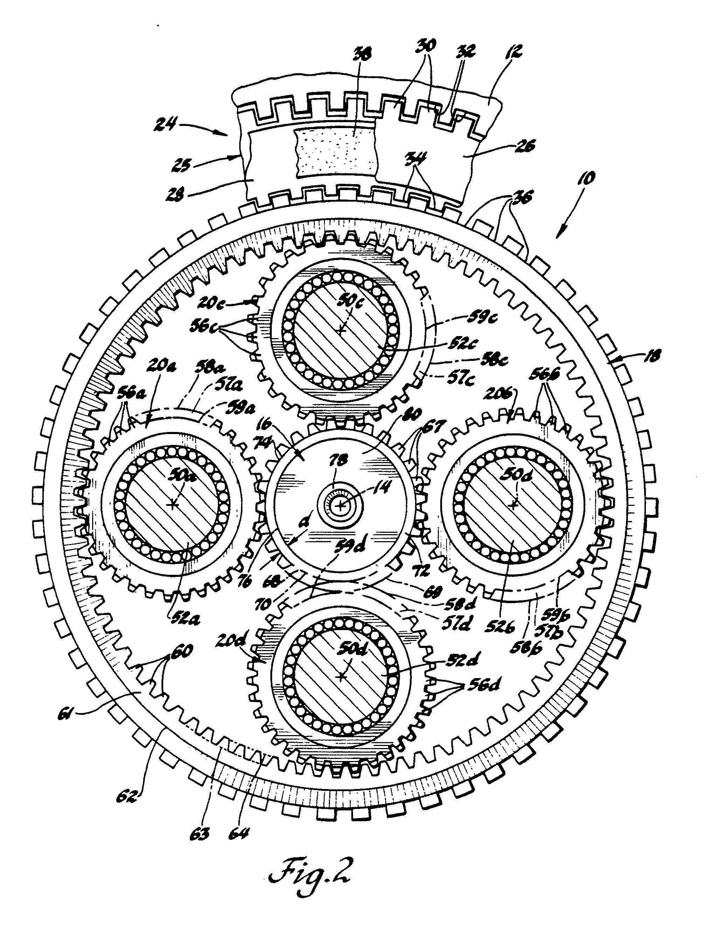

Figure 2 is a fragmentary sectional view, with parts in elevation, generally as seen from the line 2--2 in Figure I, in the direction of the arrows.

With reference now to the drawings, there is shown a planetary gear set I0 in accordance with the present invention which is to be assembled on to a supporting structure I2, specifically a transmission case, that defines a main axis I4 fixed relative to the case. The planetary gear set I0 includes a sun gear I6, a ring gear I8, a plurality of planet gears 20a to 20d, and a planet carrier 22. The ring gear I8 is connectible to the case I2 by means of a disc clutch 24.

The disc clutch 24 includes a clutch pack 25 consisting of a plurality of outer discs 26 and a plurality of inner discs 28 interleaved between the outer discs. Each outer disc has a circumferential array of outer spline teeth 30 slidably engaged in a corresponding plurality of spline grooves 32 in the case I2 centred about the axis I4. Each of the inner discs 28 has an internal circumferential array of spline teeth 34 slidably engaged in a corresponding plurality of spline grooves 36 in the ring gear I8 which are parallel to the axis I4 when the ring gear is centred about or aligned on the axis I4. Each of the inner discs 28 has a friction lining 38 on each face of the disc which slidably engages an opposing face on the adjacent one of the outer discs 26.

The clutch pack 25 is stacked against an annular backing plate 40 on the case I2 and engaged by an annular piston, not shown, which compresses the clutch pack against the backing plate. When the clutch is thus engaged, the ring gear I8 is held stationary relative to the case, and when the clutch is released the ring gear I8 is freely rotatable relative to the case I2 as the inner discs 28 rotate relative to the stationary outer discs 26. The ring gear I8 and the attached inner discs 28 are free to translate in planes perpendicular to the axis I4 by an amount corresponding generally to the clearance between the inner diameters of the outer discs 26 and the outer diameter of the ring gear I8 which circumscribes the spline grooves 36.

The planet carrier 22 includes a cylindrical shaft portion 42 having a longitudinal axis 43, and an annular cage portion 44 integral with the shaft portion. The shaft portion 42 has an internal pilot bore 46 at one end thereof in which is supported a pilot bearing 48. The cage portion 44 defines a plurality of planet axes 50a to 50d parallel to and disposed in a circle about the longitudinal axis 43 of the cylindrical shaft portion 42. A plurality of axle pins 52a to 52d are rigidly supported on the cage portion 44 and aligned on corresponding ones of the planet axes 50a to 50d. Each of the planet gears 20a to 20d is rotatably supported on a corresponding one of the axle pins 52a to 52d for rotation about the corresponding one of the planet axes. The planet gears are separated from the cage portion 44 by a plurality of annular thrust bearings 54.

Each of the planet gears has an array of gear teeth 56a to 56d thereon which extends the length of the planet gears parallel to the planet axes 50a to 50d. One end of each of the planet gears is machined in a plane perpendicular to the planet axes 50a to 50d to form an annulus 57a to 57d extending radially inwardly from the addendum circle 58a to 58d of the gear to inboard of the dedendum circle 59a to 59d of the gear. The annuli 57a to 57d are interrupted by the tooth spaces between the planet gear teeth 56a to 56d. The annuli 57a to 57d are generally coplanar. However, they are not exactly coplanar due to manufacturing tolerances in the thrust bearings 54 and in the planet gears 20a to 20d.

The ring gear I8 has an internal circumferential array of gear teeth 60 thereon adapted for meshing engagement with the gear teeth 56a to 56d on the planet gears. At the end thereof opposite the backing plate 40, the ring gear I8 has an internal bevel defining a frustoconical bevel surface 61 extending radially inwardly from an annular peak 62 radially outboard of the dedendum circle 63 of the ring gear teeth to the addendum circle 64 of the ring gear teeth. The bevel surface 61 is interrupted by the tooth spaces between the ring gear teeth 60.

The sun gear I6 is disposed on the end of a transmission shaft 66 mounted on the case I2 for rotation about the axis I4. The sun gear has an array of gear teeth 67 extending generally the length of the sun gear. The sun gear is machined at one end in a plane perpendicular to the longitudinal axis of the gear, not specifically illustrated, to define a staging annulus 68 bounded at its radially outermost extremity by the addendum circle 69 of the sun gear teeth 67 and at its radially innermost extremity by the dedendum circle 70 of the sun gear teeth.

Each of the gear teeth 67 terminates in the staging annulus 68 so that the latter is regularly interrupted by the tooth spaces between the gear teeth 67.

A frustoconical guide shoulder (concentricity chamfer) 72 on the sun gear has a radially outermost edge 74 contiguous with the dedendum circle 70 defining the innermost edge of the staging annulus 68, and also has a radially innermost edge 76. In plan view, as viewed in Figure 2, the concentricity chamfer projects as an annulus having a radial depth d. The sun gear 16 further includes an integral cylindrical pilot 78 aligned on the longitudinal axis of the sun gear and projecting from an end surface 80 of the sun gear. The pilot 78 engages the pilot bearing 48, whereby the distal end of the shaft 66 is rotatably supported on the planet carrier 22.

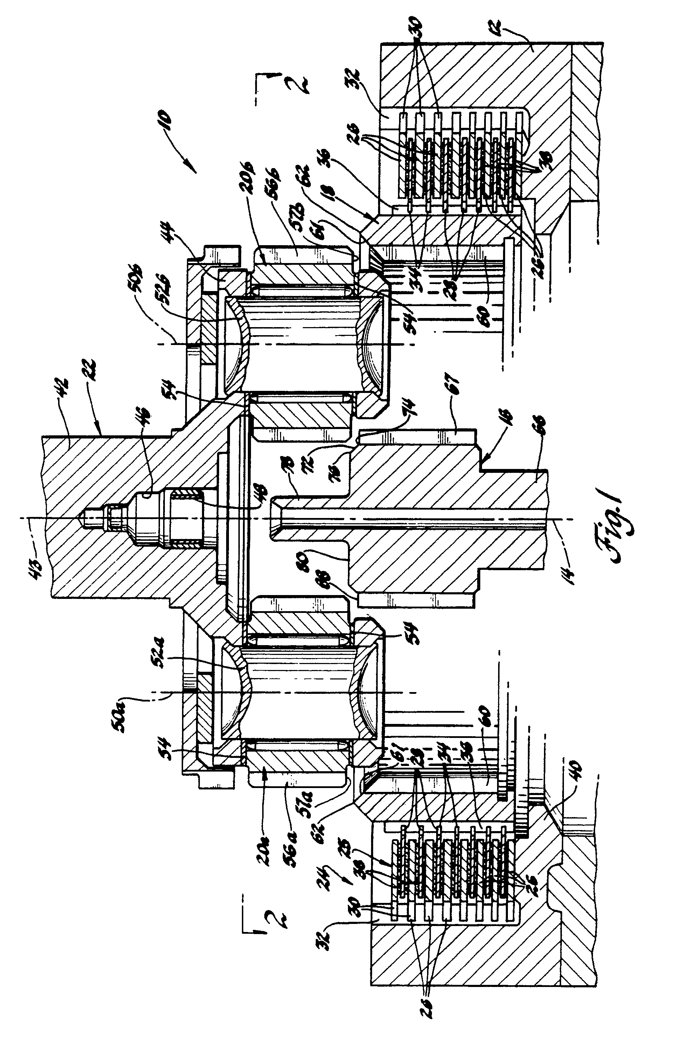

In typical transmission assembly, the transmission case 12 is inverted end-for-end several times as components are installed from opposite ends in a sequence most convenient for the particular transmission. For example, it may be convenient to assemble the clutch pack 25 and the ring gear 18 on to the case with the spline grooves 32 facing upwards, as depicted in Figure 1, followed by inversion of the case and installation of the shaft 66 with the sun gear 16 thereon from the opposite end of the case, followed by yet another inversion of the case and final assembly of the planet carrier 22.

As each inversion occurs, the components which have already been assembled usually migrate to one extreme position in their tolerance range under the influence of gravity as the case pivots. Accordingly, in the step of assembling the carrier 22 with the planet gears 20a to 20d thereon between the sun gear and the ring gear, a situation is encountered wherein the longitudinal axis of the sun gear will typically not coincide with the longitudinal axis 14 of the transmission case, and the ring gear 18 will typically exhibit a marked eccentricity relative to the sun gear.

With the ring gear and sun gear not aligned on the axis 14, simple robotic performance of the carrier assembly step proceeds as follows. The assembly robot, programmed for gripping the carrier 22 with the longitudinal axis 43 of the shaft portion 42 held in co-linear alignment with the longitudinal axis 14 of the transmission case, and for selectively advancing the carrier along the axis and rotating the same about the axis, grips the carrier and transports the same to a position aligned on the axis 14 above the sun gear and the ring gear. The carrier 22 is then advanced along the axis 14 towards the sun gear until one or more of the planet gears 20a to 20d, at the addendum circles 58a to 58d thereof, engage the sun gear on the concentricity chamfer 72. Which particular planet gear (or gears) first engages the sun gear depends upon the random eccentricity of the sun gear relative to the axis 14. The planar projection d of the concentricity chamfer is correlated with the maximum amount of eccentricity which the sun gear may exhibit such that the planet gears, at the addendum circles thereof, will always first engage the sun gear on the concentricity chamfer.

Continued advancement of the planet carrier 22 towards the sun gear after initial engagement on the concentricity chamfer 72 results in the development of a camming force between the planet gears and the sun gear, whereby the latter is forced in a direction perpendicular to the axis 14. The planet carrier 22 is advanced under a longitudinally applied force sufficient to effect camming until the carrier 22 achieves a staged position relative to the sun gear 16 wherein the annuli 57a to 57d on the planet gears overlap and abut the staging annulus 68 on the sun gear. In the staged position of the carrier, each of the addendum circles 58a to 58d of the planet gears is generally tangential to the outer edge 74 of the concentricity chamfer so that the sun gear 16 is substantially precisely aligned on the axis 14.

In the staged position of the carrier relative to the sun gear 16, the planet axes 50a to 50d are parallel to the main axis 14 of the transmission case. The ends of one or more of the planet gear teeth 56a to 56d, however, rest on the ends of the sun gear teeth 67 in the staging annulus 68 so that continued advancement of the planet carrier is blocked. With a relatively mild bias of the carrier 22 towards the sun gear, the carrier is rotated about the axis 14 so that the edges of the planet gear teeth 56a to 56d sweep across the staging annulus 68. Because of the slight bias towards the sun gear, and because of the aforementioned lack of precise coplanar alignment of each of the annuli 57a to 57d on the planet gears, sequential meshing engagement of the planet gear teeth 56a to 56d is quickly achieved as the planet gear teeth sweep across the staging annulus and encounter the tooth spaces between the sun gear teeth 67.

With the planet gears 20a to 20d thus timed on the sun gear and rotating in unison as the carrier rotates, the planet carrier 22 is further advanced along the axis 14. The planet gear teeth 56a to 56d progressively further longitudinally overlap the sun gear teeth 67 as one or more of the planet gears, at the addendum circles 58a to 58d thereof, engage the eccentrically located ring gear 18 on the frustoconical bevel surface 61.

The location of the engagement between the planet gears and the frustoconical bevel surface is randomly determined by the particular eccentricity of the ring gear. If initial engagement of the planet gears on the frustoconical bevel surface 61 is radi-

ally outboard of the dedendum circle 63 of the ring gear teeth 60, a camming force is developed by the planet gears on the ring gear I8, whereby the latter is translated in a direction perpendicular to the axis I4. When the addendum circles 58a to 58d of the planet gears are tangential to the dedendum circle 63 of the ring gear teeth, the planet gear teeth 56a to 56d simultaneously mesh with the ring gear teeth because of the timed rotation of the planet gears relative to the ring gear. The carrier 22 is then advanced to the fully assembled position in which the planet gears are disposed squarely between the ring gear I8 and the sun gear I6.

Modifications of the preferred embodiment as described are possible within the scope of the claims. For example, for timing the planet gears 20a to 20d on the ring gear I8 rather than on the sun gear I6, the staging annulus 68 formed on the end of the sun gear teeth 67 adjacent the concentricity chamfer 72 of the sun gear could be replaced by a staging annulus formed at the end of the ring gear teeth 60 adjacent the frustoconical bevel surface 6I of the ring gear.

## Claims

1. A method of assembling a planetary gear set (10) on a support (12) defining a main axis (14), the gear set (10) including a sun gear (16) having a plurality of gear teeth (67), a ring gear (18) having a plurality of gear teeth (60), a plurality of planet gears (20a to 20d) each having a plurality of gear teeth (56a to 56d) adapted to mesh with the ring gear teeth (60) and with the sun gear teeth (67), and a planet carrier (22) supporting each of the planet gears (20a to 20d) for rotation about respective ones of a corresponding plurality of parallel planet axes (50a to 50d) of the planet carrier (22), the method comprises the steps of: mounting the sun gear (16) on the support (12) for rotation about the main axis (14) and for limited translation in a plane perpendicular to the main axis (14) between aligned and eccentric positions relative to the main axis (14);

   forming a staging annulus (68) on one end of the sun gear (16) in a plane perpendicular to the main axis (14), the staging annulus (68) having a first edge defined by the addendum circle (69) of the gear teeth on the sun gear (16) and a second edge defined by the dedendum circle (70) of the gear teeth on the sun gear (16), and the staging annulus (68) being interrupted by the tooth spaces between the gear teeth on the sun gear (16);

   forming on the sun gear (16) a frustoconical concentricity chamfer (72) having one edge contiguous with the second edge of the staging annulus (68);

   aligning the planet carrier (22) on the main axis (14) and advancing the carrier (22) towards the sun gear (16) until the carrier (22) achieves a staged position relative to the sun gear (16) wherein the planet gears (20a to 20d) abut the sun gear (16) on the staging annulus (68) with the addendum circles (69) of each of the planet gears (20a to 20d) tangential to the second edge of the staging annulus (68), whereby at least one of the planet gears (20a to 20d) engages the sun gear (16) on the concentricity chamfer (72) thereof when the sun gear (16) is in the eccentric position, for camming the sun gear (16) to the aligned position when the carrier (22) achieves the staged position on the staging annulus (68);

   biasing the planet carrier (22) towards the sun gear (16); and

   effecting relative rotation between the planet carrier (22) and the sun gear (16) so that the planet gears (20a to 20d) sequentially achieve meshing engagement with the sun gear (16), characterised by the steps of:

   mounting the ring gear (18) on the support (12) around the sun gear (16) for rotation about the main axis (14) and for limited translation in a plane perpendicular to the main axis (14) between aligned and eccentric positions relative to the main axis (14);

   forming on one end of the ring gear (18) a frustoconical bevel surface (61) overlapping the ends of the ring gear teeth (60); and

   subsequent to the step of effecting relative rotation between the planet carrier (22) and the sun gear (16), further advancing the planet carrier (22) towards the ring gear (18) and rotating the planet carrier (22) to achieve substantially simultaneous meshing engagement between each of the planet gears (20a to 20d) and the ring gear (16), whereby at least one of the planet gears (20a to 20d) engages the ring gear (18) on the frustoconical bevel surface (61) thereof when the ring gear (18) is in the eccentric position, for camming the ring gear (18) to the aligned position.

2. A planetary gear set in an automotive transmission having a transmission case (12) defining a main axis (14) of the transmission, in which the planetary gear set (10) comprises a sun gear (16) having a plurality of gear teeth (67), a ring gear (18) having a plurality of gear teeth (60), a plurality of planet gears (20a to 20d) each having a plurality of gear teeth (56a to 56d) adapted to mesh with the sun gear teeth (67) and with the ring gear teeth (60), a planet carrier (22), and means mounting each of the planet gears (20a to 20d) on the planet carrier (22) for rotation about respective ones of a plurality of parallel planet axes (50a to 50d) of the carrier (22), the sun gear (16) being mounted on the transmission case (12) within the ring gear (22) for rotation about the main axis (14) and for limited translation in a plane perpendicular to the main axis (14) between aligned and eccentric positions relative to the main axis (14), a staging annulus (68) being defined on one end of the sun gear (16) in a plane perpendicular to the main axis (14) and having a first edge defined by the addendum circle (69) of the sun gear teeth (67) and a second edge defined by the dedendum circle (70) of the sun gear teeth (67), the staging annulus (68) being interrupted by the tooth spaces between the sun gear teeth (67), a frustoconical concentricity chamfer (72) being defined on the sun gear (16) and having one edge contiguous with the second edge of the staging annulus (68), whereby at least one of the planet gears (20a to 20d) engages the sun gear (16) on the concentricity chamfer (72) thereof when the sun gear (16) is in the eccentric position and the planet carrier (22) is aligned on the main axis (14) and advanced towards the sun gear (16), with the planet gears (20a to 20d) being effective to cam the sun gear (16) to the aligned position when the planet carrier (22) achieves a staged position relative to the sun gear (16) wherein the planet gears (20a to 20d) abut the sun gear (16) on the staging annulus (68) with the addendum circles (58a to 58d) of each of the planet gears (20a to 20d) tangential to the second edge of the staging annulus (68), characterised in that the ring gear (22) is mounted on the transmission case (12) for rotation about the main axis (14) and for limited translation in a plane perpendicular to the main axis (14) between aligned and eccentric positions relative to the main axis (14), and in that a frustoconical bevel surface (61) is defined on the ring gear (18) and extends from the addendum circle (64) of the ring gear teeth (60) to beyond the dedendum circle (63) of the ring gear teeth (60), whereby at least one of the planet gears (20a to 20d) engages the ring gear (18) on the frustoconical bevel surface (61) thereof when the ring gear (18) is in the eccentric position and cams the ring gear (18) to the aligned position when the planet carrier (22) is aligned on the main axis (14) and advanced towards the ring gear (18).

3. A planetary gear set according to claim 2, characterised in that the ring gear (18) is mounted on the transmission case (12) by means including a plurality of outer clutch discs (26) spline-connected to the transmission case (12), together with a plurality of inner clutch discs (28) disposed between respective pairs of the outer clutch discs (26) and spline-connected to the ring gear (18) at a location radially outboard of the ring gear teeth (60).

## Revendications

1. Procédé de montage d'un train (10) d'engrenages à pignons satellites sur un support (12) délimitant un axe principal (14), le train d'engrenages (10) comprenant un pignon central (16) qui a plusieurs dents (67), une couronne dentée (18) qui a plusieurs dents (60), plusieurs pignons satellites (20a à 20d) qui ont chacun plusieurs dents (56a à 56d) destinées à être en prise avec les dents (60) de la couronne dentée et avec les dent (67) du pignon central, et un porte-satellites (22) supportant les pignons satellites (20a à 20d) afin qu'ils tournent autour d'un axe respectif parmi un nombre correspondant d'axes parallèles (50a à 50d) de pignons satellites du porte-satellites (22), le procédé comprenant les étapes suivantes :

le montage du pignon central (16) sur le support (12) afin qu'il tourne autour de l'axe principal (14) et qu'il présente un déplacement limité en translation dans un plan perpendiculaire à l'axe principal (14) entre des positions d'alignement et excentrique par rapport à l'axe principal (14),

la formation d'un anneau d'accostage (68) à une première extrémité du pignon central (16) dans un plan perpendiculaire à l'axe principal (14), l'anneau d'accostage (68) ayant un premier bord délimité par le cercle de couronne (69) des dents du pignon central (16) et un second bord délimité par le cercle de racine (70) des dents du pignon central (16), l'anneau d'accostage (68) étant interrompu par les espaces séparant les dents du pignon central (16),

la formation, sur le pignon central (16), d'un chanfrein tronconique (72) de concentricité ayant un premier bord contigu au second bord de l'anneau d'accostage (68),

l'alignement du porte-satellites (22) sur l'axe principal (14) et l'avance du porte-satellites (22) vers le pignon central (16) jusqu'à ce que le porte-satellites (22) prenne une position accostée par rapport au pignon central (16), dans laquelle les pignons satellites (20a à 20d) sont en butée contre le pignon central (16) sur l'anneau d'accostage (68), les cercles de couronne (69) des pignons satellites (20a à 20d) étant tangents au second bord de l'anneau d'accostage (68), si bien que l'un au moins des pignons satellites (20a à 20d) est au contact du pignon central (16) sur le chanfrein de concentricité (72) de celui-ci lorsque le pignon central (16) est en position excentrique, de manière que le pignon central (16) soit déplacé par effet de came vers la position alignée lorsque le porte-satellites (22) atteint la position accostée sur l'anneau d'accostage (68),

le rappel du porte-satellites (22) vers le pignon central (16), et

la rotation relative du porte-satellites (22) et du pignon central (16) afin que les pignons satellites (20a à 20d) viennent successivement en prise avec le pignon central (16),

caractérisé par les étapes suivantes :

le montage de la couronne dentée (18) sur le support (12) autour du pignon central (16) afin qu'elle tourne autour de l'axe principal (14) et présente un déplacement limité en translation dans un plan perpendiculaire à l'axe principal (14) entre des positions d'alignement et excentrique par rapport à l'axe principal (14),

la formation, à une première extrémité de la couronne dentée (18), d'une surface tronconique (61) de chanfrein qui recouvre les extrémités des dents (60) de la couronne dentée, et

après l'étape de rotation relative du porte-satellites (22) et du pignon central (16), la poursuite de l'avance du porte-satellites (22) vers la couronne dentée (18) et l'entraînement en rotation du porte-satellites (22) afin que tous les pignons satellites (20a à 20d) et la couronne dentée (16) viennent en prise pratiquement simultanément, si bien que l'un au moins des pignons satellites (20a à 20d) est en prise avec la couronne dentée (18) sur la surface tronconique (61) de son chanfrein lorsque la couronne dentée (18) est en position excentrique et assure la mise de la couronne dentée (18) en position d'alignement par effet de came.

2. Train d'engrenages à pignons satellites pour transmission d'automobile ayant un carter (12) de transmission délimitant un axe principal (14) de transmission, dans lequel le train (10) d'engrenages à pignons satellites comprend un pignon central (16) ayant plusieurs dents (67), une couronne dentée (18) ayant plusieurs dents (60), plusieurs pignons satellites (20a à 20d) ayant chacun plusieurs dents (56a à 56d) destinées à être en prise avec les dents (67) du pignon central et avec les dents (60) de la couronne dentée, un porte-satellites (22), et un dispositif de montage de chacun des pignons satellites (20a à 20d) sur le porte-satellites (22) afin qu'ils tournent autour d'axes respectifs parmi plusieurs axes parallèles (50a à 50d) de pignons satellites du porte-satellites (22), le pignon central (16) étant monté sur le carter (12) de transmission à l'intérieur de la couronne dentée (22) afin qu'il tourne autour de l'axe principal (14) et qu'il présente un déplacement limité en translation dans un plan perpendiculaire à l'axe principal (14) entre des positions d'alignement et excentrique par rapport à l'axe principal (14), un anneau d'accostage (68) étant délimité sur une première extrémité du pignon central (16) dans un plan perpendiculaire à l'axe principal (14) et ayant un premier bord délimité par le cercle de couronne (69) des dents (67) du pignon central et un second bord délimité par le cercle de racine (70) des dents (67) du pignon central, l'anneau d'accostage (68) étant interrompu par les espaces compris entre les dents (67) du pignon central, un chanfrein tronconique (72) de concentricité étant délimité sur le pignon central (16) et ayant un premier bord contigu au second bord de l'anneau d'accostage (68), si bien que l'un au moins des pignons satellites (20a à 20d) coopère avec le pignon central (16) sur le chanfrein de concentricité (72) de ce pignon lorsque le pignon central (16) est en position excentrique et le porte-satellites (22) est aligné sur l'axe principal (14) et avance vers le pignon central (16), les pignons satellites (20a à 20d) assurant efficacement le déplacement du pignon central (16) par effet de came vers la position d'alignement lorsque le porte-satellites (22) atteint, par rapport au pignon central (16), une position accostée dans laquelle les pignons satellites (20a à 20d) sont en butée contre le pignon central (16) sur l'anneau d'accostage (68), les cercles de couronne (58a à 58d) des pignons satellites (20a à 20d) étant tangents au second bord de l'anneau d'accostage (68),

caractérisé en ce que la couronne dentée (22) est montée sur le carter de transmission (12) afin qu'elle puisse tourner autour de l'axe principal (14) et qu'elle puisse présenter un déplacement limité en translation dans un plan perpendiculaire à l'axe principal (14) entre des positions d'alignement et excentrique par rapport à l'axe principal (14), et en ce qu'une surface tronconique (61) de chanfrein est délimitée sur la couronne dentée (18) et s'étend depuis le cercle de couronne (64) des dents (60) de la couronne dentée jusqu'au delà du cercle de racine (63) des dents (60) de la couronne dentée, si bien que l'un au moins des pignons satellites (20a à 20d) est au contact de la couronne dentée (18) sur la surface tronconique (61) de chanfrein de cette couronne, lorsque la couronne (18) est en position excentrique, et déplace la couronne dentée (18) par effet de came vers la position d'alignement lorsque le porte-satellites (22) est aligné sur l'axe principal (14) et avance vers la couronne dentée (18).

3. Train d'engrenages à pignons satellites selon la revendication 2, caractérisé en ce que la couronne dentée (18) est montée sur le carter de transmission (12) par un dispositif comprenant plusieurs disques externes (26) d'embrayage raccordés par des cannelures au carter (12) de transmission, et plusieurs disques internes (28) d'embrayage placés entre des disques externes (26) d'une paire respective et raccordés par des cannelures à la couronne dentée (18) à un emplacement qui se trouve radialement à l'extérieur des dents (60) de la couronne dentée.

## Patentansprüche

1. Verfahren zum Zusammenbau eines Planetengetriebesatzes (10) an einem eine Hauptachse (14) bestimmenden Träger (12), wobei der Getriebesatz (10) enthält ein Sonnen-Zahnrad (16) mit einer Vielzahl von Radzähnen (67), ein Ring-Zahnrad (18) mit einer Vielzahl von Radzähnen (60), eine Vielzahl von Planeten-Zahnrädern (20a bis 20d) mit jeweils einer Vielzahl von Radzähnen (56a bis 56d), die ausgelegt sind, mit den Ringrad-Zähnen (60) und den Sonnenrad-Zähnen (67) zu kämmen, und einen Planet-Träger (22), der jedes Planeten-Zahnrad (20a bis 20d) zur Drehung um eine jeweilige aus einer entsprechenden Vielzahl von zueinander parallelen Planet-Achsen (50a bis 50d) des Planet-Trägers (22) abstützt, wobei das Verfahren die Schritte umfaßt:

das Sonnen-Zahnrad (16) wird an dem Träger (12) zur Drehung um die Hauptachse (14) und zur begrenzten Querbewegung in einer zur Hauptachse (14) senkrechten Ebene zwischen ausgerichteten und exzentrischen Lagen relativ zur Hauptachse (14) angebracht;

ein Stufenring (68) wird an einem Ende des Sonnen-Zahnrades (16) in einer zur Hauptachse (14) senkrechten Ebene ausgebildet, wobei der Stufenring (68) eine erste, durch den Kopfkreis (69) der Radzähne an dem Sonnen-Zahnrad (16) bestimmte Kante und eine zweite durch den Fußkreis (70) der Radzähne an dem Sonnen-Zahnrad (16) bestimmte Kante besitzt und der Stufenring (68) durch die Zahnräume zwischen den Radzähnen an dem Sonnen-Zahnrad (16) unterbrochen ist;

an dem Sonnen-Zahnrad (16) wird eine kegelstumpfförmige Konzentrizitäts-Fase (72) ausgebildet mit einer der zweiten Kante des Stufenrings (68) benachbarten Kante;

es wird der Planet-Träger (22) an der Hauptachse (14) ausgerichtet und der Träger (22) zu dem Sonnen-Zahnrad (16) hin vorgeschoben, bis der Träger (22) eine gestufte Lage relativ zum Sonnen-Zahnrad (16) einnimmt, in der die Planeten-Zahnräder (20a bis 20d) an dem Sonnen-Zahnrad (16) bei dem Stufenring (68) anliegen, wobei die Kopfkreise (69) der Planeten-Zahnräder (20a bis 20d) tangential zur zweiten Kante des Stufenrings (68) verlaufen, wodurch mindestens ein Planeten-Zahnrad (20a bis 20d) bei dem Sonnen-Zahnrad (16) an dessen Konzentrizitäts-Fase (72) anliegt, wenn das Sonnen-Zahnrad (16) in der exzentrischen Lage ist, um das Sonnen-Zahnrad (16) zu der ausgerichteten Lage zu treiben, wenn der Träger (22) die gestufte Lage an dem Stufenring (68) einnimmt,

der Planeten-Träger (22) wird zum Sonnen-Zahnrad (16) hin vorgespannt, und

eine Relativdrehung wird zwischen dem Planet-Träger (22) und dem Sonnen-Zahnrad (16) so bewirkt, daß die PlanetenZahnräder (20a bis 20d) der Reihe nach in Kämmeingriff mit dem Sonnen-Zahnrad (16) kommen,

gekennzeichnet durch die Schritte:

das Ringzahnrad (18) wird an dem Träger (12) um das Sonnen-Zahnrad (16) angebracht zur Drehung um die Hauptachse (14) und zur begrenzten Verschiebung zwischen ausgerichteten und exzentrischen Lagen relativ zur Hauptachse (14) in einer zur Hauptachse (14) senkrechten Ebene;

an einem Ende des Ringzahnrads (18) wird eine kegelstumpfförmige Fasenfläche (16) ausgebildet, welche die Enden der Ringzahnrad-Zähne (16) überdeckt, und

nach dem Einleiten einer Relativdrehung zwischen dem Planet-Träger (22) und dem Sonnen-Zahnrad (16) wird der Planet-Träger (22) weiter zu dem Ring-Zahnrad (18) hin vorgeschoben und der Planet-Träger (22) gedreht, um im wesentlichen gleichzeitigen Kämmeingriff zwischen jedem Planeten-Zahnrad (20a bis 20d) und dem Ring-Zahnrad (16) zu erreichen, wodurch mindestens ein Planeten-Zahnrad (20a bis 20d) mit dem Ring-Zahnrad (18) an dessen kegelstumpfförmiger Fasenfläche (61) in Eingriff kommt, wenn das Ring-Zahnrad (18) in der exzentrischen Lage ist, zum Einschieben des Ringzahnrades (18) in die ausgerichtete Lage.

2. Planetengetriebesatz in einem Kraftfahrzeuggetriebe mit einem Getriebegehäuse (12), das eine Hauptachse (14) des Getriebes bestimmt, wobei der Planetengetriebesatz (10) umfaßt ein Sonnen-Zahnrad (16) mit einer Vielzahl von Getriebezähnen (67), ein Ring-Zahnrad (18) mit einer Vielzahl von Getriebezähnen (60), eine Vielzahl von Planeten-Zahnrädern (20a bis 20d) mit jeweils einer Vielzahl von Getriebezähnen (56a bis 56d), ausgelegt zum Kämmen mit den Sonnenrad-Zähnen (67) und mit den Ringrad-Zähnen (60), einen Planetenträger (22) und Mittel zum Befestigen jedes Planeten-Zahnrades (20a bis 20d) an dem Planet-Träger (22) zur Drehung um eine jeweilige aus einer Vielzahl von zueinander parallelen Planet-Achsen (50a bis 50d) des Trägers (22), wobei das Sonnen-Zahnrad (16) an dem Getriebegehäuse 812) innerhalb des Ringzahnrades (22) zur Drehung um die Hauptachse (14) und zur begrenzten Verschiebung in einer zur Hauptachse (14) senkrechten Ebene zwischen ausgerichteten und exzentrischen Lagen relativ zur Hauptachse (14) befestigt ist, ein Stufenring (68) bestimmt ist an einem Ende des Sonnen-Zahnrades (16) in einer zur Hauptachse (14) senkrechten Ebene und mit einer ersten Kante, die durch den Kopfkreis (69) der Sonnen-Radzähne (67) bestimmt ist, und einer zweiten Kante, die durch den Fußkreis (70) der Sonnen-Radzähne (67) bestimmt ist, wobei der Stufenring (68) durch die Zahnzwischenräume zwischen den Sonnen-Radzähnen (67) unterbrochen ist, eine kegelstumpfförmige Konzentrizitäts-Fase (72) an dem Sonnen-Zahnrad (16) bestimmt ist mit einer an die zweite Kante des Sufenrings (68) anschließenden Kante, wodurch mindestens eines der Planeten-Zahnräder (20a bis 20d) bei dem Sonnen-Zahnrad (16) an dessen Konzentrizitäts-Fase (72) in Eingriff ist, wenn das Sonnen-Zahnrad (16) in der exzentrischen Lage ist und der Planet-Träger (22) an der Hauptachse (14) ausgerichtet und zu dem Sonnen-Zahnrad (16) vorgeschoben ist, wobei die Planeten-Zahnräder (20a bis 20d) ein Eindrücken des Sonnen-Zahnrades (16) in die ausgerichtete Lage bewirken, wenn der Planet-Träger (22) eine gestufte Lage relativ zum Sonnen-Zahnrad (16) einnimmt, wobei die Planeten-Zahnräder (20a bis 20d) bei dem Sonnen-Zahnrad (16) an dem Stufenring (68) anliegen mit dem Kopfkreis (58a bis 58d) jedes Planeten-Zahnrads (20a bis 20d) tangential zur zweiten Kante des Stufenrings (68),

dadurch gekennzeichnet, daß das Ring-Zahnrad (22) an dem Getriebegehäuse (12) zur Drehung um die Hauptachse (14) und zur begrenzten Verschiebung in einer zur Hauptachse (14) senkrechten Ebene zwischen ausgerichteten und exzentrischen Lagen relativ zur Hauptachse (14) angebracht ist, und daß eine kegelstumpfförmige Fasenfläche (61) an dem Ringzahnrad (18) bestimmt ist und sich von dem Kopfkreis (64) der Ringrad-Zähne (60) bis über den Fußkreis (63) der Ringrad-Zähne (60) hinaus erstreckt, wodurch mindestens eines der Planeten-Zahnräder (20a bis 20d) mit dem Ring-Zahnrad (18) an dessen kegelstumpfförmiger Fasenfläche (61) in Eingriff ist, wenn das Ring-Zahnrad (18) sich in der exzentrischen Lage befindet und das Ring-Zahnrad (18) zu der ausgerichteten Lage hin drückt, wenn der Planet-Träger (22) an der Hauptachse (14) ausgerichtet und zu dem Ring-Zahnrad (18) hin vorgeschoben ist.

3. Planeten-Getriebesatz nach dem Anspruch 2, dadurch gekennzeichnet, daß das Ring-Zahnrad (18) an dem Getriebegehäuse (12) durch Mittel angebracht ist, welche eine Vielzahl von äußeren Kupplungsscheiben (26) enthalten, die über Längszähne mit dem Getriebegehäuse (12) verbunden sind, zusammen mit einer Vielzahl von inneren Kupplungsscheiben (28), die zwischen jeweiligen Paaren von äußeren Kupplungsscheiben (26) angeordnet und über Längszähne an einer Stelle radial außerhalb der Ringradzähne (60) mit dem Ring-Zahnrad (18) verbunden sind.

Fig.1

Fig.2